Europäisches Patentamt

European Patent Office

Office européen des brevets

(11) Veröffentlichungsnummer: **0 109 510 B1**

(12)
# EUROPÄISCHE PATENTSCHRIFT

(45) Veröffentlichungstag der Patentschrift:
25.06.86

(51) Int. Cl.⁴: **G 01 B 13/00**

(21) Anmeldenummer: 83109513.8

(22) Anmeldetag: 24.09.83

(54) **Messeinrichtung.**

(30) Priorität: 18.11.82 DE 3242528

(43) Veröffentlichungstag der Anmeldung:
30.05.84 Patentblatt 84/22

(45) Bekanntmachung des Hinweises auf die Patenterteilung:
25.06.86 Patentblatt 86/26

(84) Benannte Vertragsstaaten:
AT CH DE FR GB IT LI NL SE

(56) Entgegenhaltungen:
DE - A - 2 215 880
DE - A - 2 821 360
DE - C - 1 082 422
US - A - 3 299 584

M. Merkel et al. "Technisches Grundwissen des
Meisters" Band 2 1. Auflage 1978 VEB Fachbuch-Verlag
Leipzig S. 317 und 318
Firma Dr. Johannes Heidenhain GmbH in Traunreut (DE)
"Fertigungsprogramm" Ausgabe Oktober 1969, Seite 12

(73) Patentinhaber: **Dr. Johannes Heidenhain GmbH,
Nansenstrasse 17, D-8225 Traunreut (DE)**

(72) Erfinder: **Kober, Hans-Rudolf, Dipl.-Ing., Breslauer
Strasse 2, D-8225 Traunreut (DE)**

**Beschreibung**

Die Erfindung betrifft eine Messeinrichtung, insbesonders einen Längenmesstaster, gemäss dem Oberbegriff des Anspruchs 1.

Derartige Messeinrichtungen in Form von Koordinatenmessmaschinen und von Längenmesstastern zum Messen von Abmessungen (beispielsweise Dikken oder Endmassen) eines Prüfobjekts sind bereits bekannt (DE-OS 2 821 360, DE-PS 1 082 422).

In der Druckschrift von M. Merkel et al «Technisches Grundwissen des Meisters» Band 2, 1. Auflage 1978, VEB Fachbuchverlag Leipzig, Seiten 317-318 ist ein Längenmesstaster mit einer geriffelten Messfläche dargestellt.

Im Prospekt der Firma DR. JOHANNES HEIDENHAIN GmbH, Traunreut «Fertigungsprogramm» Ausgabe Oktober 1969, Seite 12 ist ein hochpräzises Rundheitsmessgerät mit Luftlager beschrieben, dessen Rundlaufmesstisch eine Mittenaufnahme und Nuten für Klemmen aufweist.

Bei der genauen Messung der Abmessungen des Prüfobjekts besteht aber die Schwierigkeit, das Prüfobjekt definiert (reproduzierbar) auf die Messtischfläche der Messeinrichtung aufzusetzen. Selbst bei grösster Sauberkeit der Messtischfläche und der Auflagefläche des Prüfobjekts treten Messwertunterschiede bis zu mehreren Mikrometern auf. Die Ursache für diese Messungenauigkeiten liegt in der zwischen den (sehr ebenen) Kontaktflächen des Messtisches und des Prüfobjekts eingeschlossenen Luftschicht begründet. Die Beseitigung dieser Luftschicht ist auch durch starkes Andrücken des Prüfobjekts an die Messtischfläche nicht bzw. nur unvollständig möglich.

Der Erfindung liegt die Aufgabe zugrunde, bei einer Messeinrichtung der obengenannten Gattung derartige Messungenauigkeiten zu beheben.

Diese Aufgabe wird erfindungsgemäss durch die kennzeichnenden Merkmale des Anspruchs 1 gelöst.

Die mit der Erfindung erzielten Vorteile bestehen insbesondere darin, dass bei derartigen Messeinrichtungen die Messgenauigkeit mit einfachen Mitteln wesentlich erhöht werden kann.

Vorteilhafte Ausbildungen der Erfindung entnimmt man den Unteransprüchen.

Ausführungsbeispiele der Erfindung werden anhand der Zeichnung näher erläutert.

Es zeigen:

Fig. 1 eine vereinfachte Seitenansicht eines Längenmesstasters,

Fig. 2 einen Querschnitt durch den Messtisch des Längenmesstasters nach Fig. 1 mit Merkmalen der Erfindung und

Fig. 3 bis 5 weitere Querschnitte von Messtisch und Zwischenplatten mit Merkmalen der Erfindung.

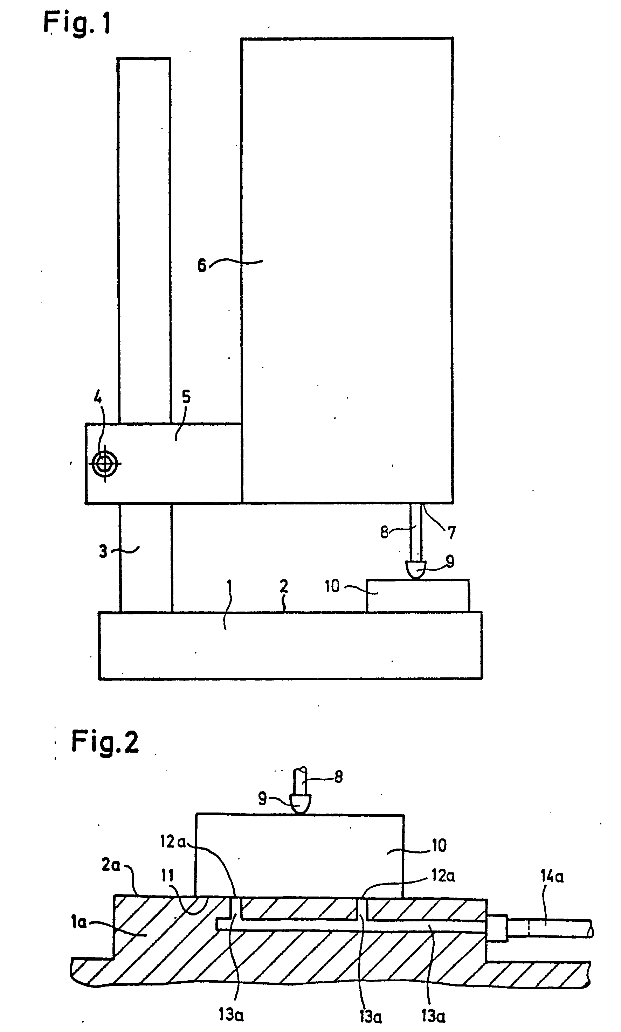

In Fig. 1 ist eine vereinfachte Seitenansicht eines Längenmesstasters dargestellt. Auf einem Messtisch 1 mit einer horizontalen ebenen Messfläche 2 ist seitlich eine senkrechte Säule 3 befestigt, an der ein höhenverstellbarer und mittels einer Klemmschraube 4 fixierbarer horizontaler Arm 5 angeordnet ist, der mit einem Gehäuse 6 verbunden ist. Aus einer gegen Umwelteinflüsse abgedichteten Öffnung 7 des Gehäuses 6 ragt eine Messpinole 8 senkrecht nach unten heraus und weist an ihrem Ende einen austauschbaren Messeinsatz 9 auf, der zum Abtasten der Abmessungen eines Prüfobjekts 10 auf der Messfläche 2 des Messtisches 1 mit demselben in Kontakt tritt. Weitere Einzelheiten dieses bekannten Längenmesstasters sind im DE-GM 7 835 649 beschrieben.

In Fig. 2 ist auf einer Messfläche 2a eines Messtisches 1a das Prüfobjekt 10 angeordnet, das vom Messeinsatz 9 der Messpinole 8 angetastet wird. Zur Behebung der Messungenauigkeiten weist erfindungsgemäss die Messfläche 2a unterhalb der Auflagefläche 11 des Prüfobjekts 10 zwei Öffnungen 12a auf, die über einen Kanal 13a am Messtisch 1a mit einer externen Saugleitung 14a verbunden sind und ein Absaugen der zwischen der Messfläche 2a und der Auflagefläche 11 des Prüfobjekts 10 beim Aufsetzen des Prüfobjekts 10 auf die Messfläche 2a verbliebenen Luftschicht ermöglichen.

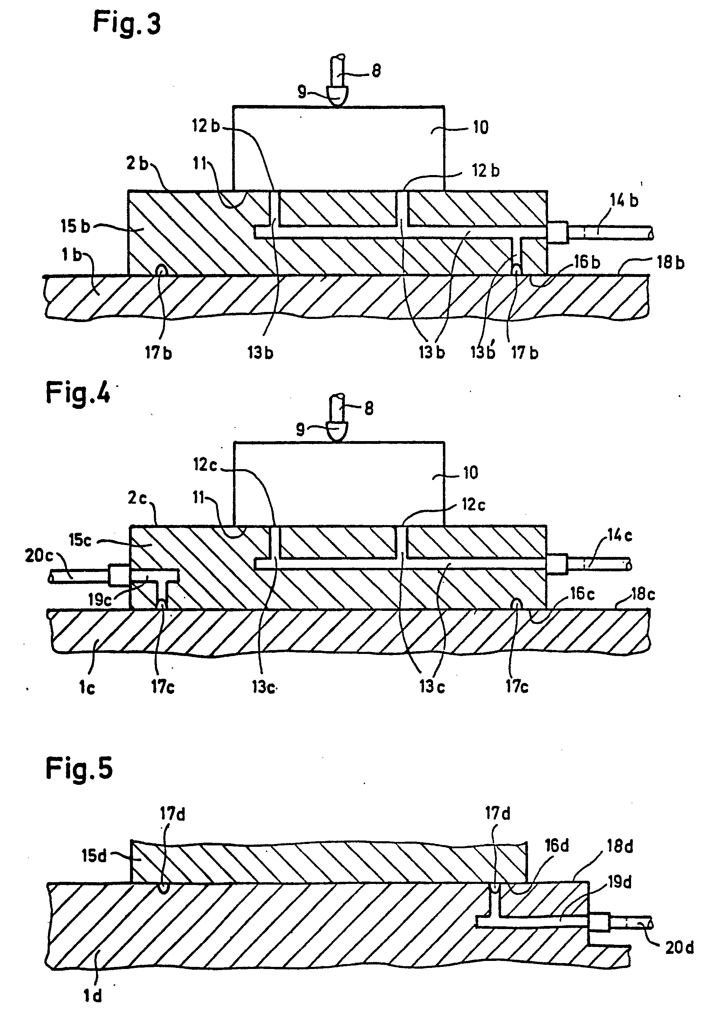

Gemäss Fig. 3 ist das vom Messeinsatz 9 der Messpinole 8 angetastete Prüfobjekt 10 auf einer Messfläche 2b angeordnet, die durch die Oberfläche einer planparallelen Zwischenplatte 15b gebildet ist, die auf einem Messtisch 1b aufliegt. Zur Behebung der Messungenauigkeiten weist die Messfläche 2b unterhalb der Auflagefläche 11 des Prüfobjekts 10 zwei Öffnungen 12b auf, die über einen Kanal 13b in der Zwischenplatte 15b mit einer externen Saugleitung 14b verbunden sind und ein Absaugen der zwischen der Messfläche 2b und der Auflagefläche 11 des Prüfobjekts 10 beim Aufsetzen des Prüfobjekts 10 auf die Messfläche 2b verbliebenen Luftschicht ermöglichen.

In weiterer Ausbildung der Erfindung weist die Auflagefläche 16b der Zwischenplatte 15b auf dem Messtisch 1b Öffnungen 17b in Form einer Ringnut auf, die über einen Kanal 13b' in der Zwischenplatte 15b mit dem Kanal 13b und der externen Saugleitung 14b verbunden sind und ein Absaugen der zwischen der Auflagefläche 15b der Zwischenplatte 15b und der Oberfläche 18b des Messtisches 1b befindlichen Luftschicht ermöglichen.

Die Verwendung einer derartigen Zwischenplatte 15b weist den Vorteil auf, dass dieselbe hinsichtlich ihrer Grösse, ihrer Form und ihres Materials sowie der Lage der Öffnungen 12b einfacher dem Prüfobjekt 10 angepasst werden kann als der Messtisch 1b selbst.

Nach Fig. 4 ist das vom Messeinsatz 9 der Messpinole 8 angetastete Prüfobjekt 10 auf einer Messfläche 2c angeordnet, die durch die Oberfläche einer planparallelen Zwischenplatte 15c gebildet ist, die auf einem Messtisch 1c aufliegt. Zur Behebung der Messgenauigkeit weist die Messfläche 2c unterhalb der Auflagefläche 11 des Prüfobjekts 10 zwei Öffnungen 12c auf, die über einen Kanal 13c in der Zwischenplatte 15c mit einer externen Saugleitung 14c verbunden sind und ein Absaugen der zwischen der Messfläche 2c und der Auflagefläche 11 des Prüfobjekts 10 befindlichen Luftschicht ermöglichen.

Die Auflagefläche 16c der Zwischenplatte 15c auf dem Messtisch 1c weist Öffnungen 17c in Form einer Ringnut auf, die über einen Kanal 19c in der Zwischenplatte 15c mit einer externen Saugleitung 20c verbunden sind und ein Absaugen der zwischen der Auflagefläche 16c und der Zwischenplatte 15c und der Oberfläche 18c des Messtisches 1c befindlichen Luftschicht ermöglichen.

Die getrennten Saugleitungen 14c und 20c bieten die Möglichkeit einer unterschiedlichen Ansaugung des Prüfobjekts 10 an die Zwischenplatte 15c und der Zwischenplatte 15c an den Messtisch 1c. Darüber hinaus kann die Saugleitung 20c wahlweise auch mit einem Überdruck beaufschlagt werden, um die Zwischenplatte 15c mit dem Prüfobjekt 10 auf einem Luftkissen verschleissfrei und kräftearm auf dem Messtisch 1c in die gewünschten Messpositionen verschieben zu können. Nach erfolgter Positionierung wird durch Umschalten von Druck- auf Saugbetrieb die Auflagefläche 16c der Zwischenplatte 15c wieder in Kontakt mit der Oberfläche 18c des Messtisches 1c zur Erzielung der höhendefinierten Messstellung gebracht.

Die Anordnung gemäss Fig. 5 unterscheidet sich von der Anordnung nach Fig. 4 lediglich in dem Punkt, dass die Oberfläche 18d des Messtisches 1d unterhalb der Auflagefläche 16d der Zwischenplatte 15d an deren Statt Öffnungen 17d in Form einer Ringnut aufweist, die über einen Kanal 19d im Messtisch 1d mit einer externen Leitung 20d verbunden sind, die mit Überdruck oder Unterdruck zum Verschieben der Zwischenplatte 15d auf dem Messtisch 1d und zum Absaugen der Luftschicht zwischen der Auflagefläche 16d der Zwischenplatte 15d und der Oberfläche 18d des Messtisches 1d beaufschlagt werden kann.

Bevorzugte Ausführungsformen der Erfindung weisen mehrere Öffnungen 12 in der Messfläche 2 auf; im Prinzip ist die Erfindung auch mit nur einer Öffnung in der Messfläche realisierbar, wenn die Auflagefläche des Prüfobjekts relativ klein ist.

Bei mehreren Öffnungen in der Messfläche können auch nur bestimmte Gruppen von Öffnungen entsprechend der Auflagefläche des Prüfobjekts beaufschlagt werden. Beispielsweise können die einzelnen Gruppen aus ringförmig angeordneten konzentrischen Lochreihen bestehen, die jeweils mit einer separaten Ansaugleitung verbunden sind. Zum Absaugen der Luftschicht werden nur die vollständig unter der Auflagefläche des Prüfobjekts befindlichen Gruppen von Öffnungen mit Unterdruck beaufschlagt.

**Patentansprüche**

1. Messeinrichtung, insbesondere Längenmesstaster, zur Messung von Abmessungen eines Prüfobjekts (10) mit einem Tastelement (8, 9) und einer das Prüfobjekt (10) aufnehmenden Messfläche (2), die unterhalb der Auflagefläche (11) des Prüfobjekts (10) mindestens eine Öffnung (12) aufweist, dadurch gekennzeichnet, dass die mindestens eine Öffnung (12) zum Absaugen der zwischen der Messfläche (2) und der Auflagefläche (11) des Prüfobjekts (10) befindlichen Luftschicht eingerichtet ist.

2. Messeinrichtung nach Anspruch 1, dadurch gekennzeichnet, dass die Messfläche (2a) durch die Oberfläche eines Messtisches (1a) gebildet ist.

3. Messeinrichtung nach Anspruch 1, dadurch gekennzeichnet, dass die Messfläche (2b, 2c) durch die Oberfläche einer auf einem Messtisch (1b, 1c) aufliegenden Zwischenplatte (15b, 15c) gebildet ist.

4. Messeinrichtung nach den Ansprüchen 1 und 2, dadurch gekennzeichnet, dass die Öffnungen (12a) der Messfläche (2a) über einen Kanal (13a) im Messtisch (1a) mit einer externen Saugleitung (14a) verbunden sind.

5. Messeinrichtung nach den Ansprüchen 1 und 3, dadurch gekennzeichnet, dass die Öffnungen (12b, 12c) der Messfläche (2b, 2c) über einen Kanal (13b, 13c) in der Zwischenplatte (15b, 15c) mit einer externen Saugleitung (14b, 14c) verbunden sind.

6. Messeinrichtung nach Anspruch 3, dadurch gekennzeichnet, dass die Auflagefläche (16b, 16c) der Zwischenplatte (15b, 15c) auf dem Messtisch (1b, 1c) mindestens eine Öffnung (17b, 17c) zum Absaugen der zwischen der Auflagefläche (16b, 16c) der Zwischenplatte (15b, 15c) und der Oberfläche (18b, 18c) des Messtisches (1b, 1c) befindlichen Luftschicht aufweist.

7. Messeinrichtung nach Anspruch 3, dadurch gekennzeichnet, dass die Oberfläche (18d) des Messtisches (1d) unterhalb der Auflagefläche (16d) der Zwischenplatte (15d) mindestens eine Öffnung (17d) zum Absaugen der zwischen der Oberfläche (18d) des Messtisches (1d) und der Auflagefläche (16d) der Zwischenplatte (15d) befindlichen Luftschicht aufweist.

8. Messeinrichtung nach den Ansprüchen 5 und 6, dadurch gekennzeichnet, dass die Öffnungen (17b) in der Auflagefläche (16b) der Zwischenplatte (15b) über Kanäle (13b, 13b') in der Zwischenplatte (15b) mit den Öffnungen (12b) in der Messfläche (2b) der Zwischenplatte (15b) verbunden sind.

9. Messeinrichtung nach Anspruch 6, dadurch gekennzeichnet, dass die Öffnungen (17c) der Auflagefläche (16c) der Zwischenplatte (15c) über einen Kanal (19c) in der Zwischenplatte (15c) mit einer externen Leitung (20c) verbunden sind.

10. Messeinrichtung nach Anspruch 7, dadurch gekennzeichnet, dass die Öffnungen (17d) in der Oberfläche (18d) des Messtisches (1d) über einen Kanal (19d) im Messtisch (1d) mit einer externen Leitung (20d) verbunden sind.

11. Messeinrichtung nach den Ansprüchen 9 und 10, dadurch gekennzeichnet, dass die externen Leitungen (20c, 20d) mit Überdruck oder mit Unterdruck beaufschlagbar sind.

12. Messeinrichtung nach Anspruch 1, dadurch gekennzeichnet, dass von den Öffnungen in der Messfläche nur bestimmte Gruppen von Öffnungen entsprechend der Auflagefläche des Prüfobjekts mit Unterdruck beaufschlagbar sind.

**Claims**

1. Measuring apparatus, in particuluar linear measuring sensor, for measuring dimensions of a test object (10) with a sensing element (8, 9) and a measuring area (2) receiving the test object (10), which area has underneath the bearing area (11) of the test object (10) at least one opening (12), characterised in that the at least one opening (12) is designed for suction-removal of the air layer located between the measuring area (2) and the bearing area (11) of the test object (10).

2. Measuring apparatus according to Claim 1, characterised in that the measuring area (2a) is formed by the surface of a measuring table (1a).

3. Measuring apparatus according to Claim 1, characterised in that the measuring area (2b, 2c) is formed by the surface of an intermediate plate (15b, 15c) resting on a measuring table (1b, 1c).

4. Measuring apparatus according to Claims 1 and 2, characterised in that the openings (12a) of the measuring area (2a) are connected by a channel (13a) in the measuring table (1a) to an external suction line (14a).

5. Measuring apparatus according to Claim 1 and 3, characterised in that the openings (12b, 12c) of the measuring area (2b, 2c) are connected via a channel (13b, 13c) in the intermediate plate (15b, 15c) to an external suction line (14b, 14c).

6. Measuring apparatus according to Claim 3 characterised in that the bearing area (16b, 16c) of the intermediate plate (15b, 15c) has at least one opening (17b, 17c) for suction-removal of the air layer located between the bearing area (16b, 16c) of the intermediate plate (15b, 15c) and the surface (18b, 18c) of the measuring table (1b, 1c).

7. Measuring apparatus according to Claim 3, characterised in that the surface (18d) of the measuring table (1d) underneath the bearing area (16d) of the intermediate plate (15d) has at least one opening (17d) for suction-removal of the air layer located between the surface (18d) of the measuring (1d) and the bearing area (16d) of the intermediate plate (15d).

8. Measuring apparatus according to Claims 5 and 6, characterised in that the openings (17b) in the bearing area (16b) of the intermediate plate (15b) are connected via channels (13b, 13b') in the intermediate plate (15b) of the openings (12b) in the measuring area (2b) of the intermediate plate (15b).

9. Measuring apparatus according to Claim 6, characterised in that the openings (17c) of the bearing area (16c) of the intermediate plate (15c) are connected via a channel (19c) in the intermediate plate (15c) to an external line (20c).

10. Measuring apparatus according to Claim 7, characterised in that the openings (17d) in the surface (18c) of the measuring table (1d) are connected via a channel (19d) in the measuring table (1d) to an external line (20d).

11. Measuring apparatus according to Claim 9 and 10, characterised in that overpressure or underpressure can be applied to the external lines (20c, 20d).

12. Measuring apparatus according to Claim 1 characterised in that underpressure can be applied to only certain groups of openings of the openings in the measuring area, corresponding to the bearing area of the test object.

## Revendications

1. Dispositif de mesure, en particulier palpeur de mesure de longueurs, pour la mesure de dimensions d'un objet à examiner (10), comprenant un élément palpeur (8, 9) et une surface de mesure (2) qui reçoit l'objet à examiner (10) et comporte au moins une ouverture (12) en dessous de la surface d'appui (11) de l'objet à examiner (10), caractérisé par le fait qu'au moins une ouverture (12) est aménagée pour l'aspiration de la couche d'air se trouvant entre la surface de mesure (2) et la surface d'appui (11) de l'objet à examiner (10).

2. Dispositif de mesure selon la revendication 1, caractérisé par le fait que la surface de mesure (2a) est formée par la surface d'une table de mesure (1a).

3. Dispositif de mesure selon la revendication 1, caractérisé par le fait que la surface de mesure (2b, 2c) est formée par la surface d'une plaque intermédiaire (15b, 15c) posée sur une table de mesure (1b, 1c).

4. Dispositif de mesure selon les revendications 1 et 2, caractérisé par le fait que les ouvertures (12a) de la surface de mesure (2a) sont raccordées à une conduite d'aspiration externe (14a) par un canal (13a) pratiqué dans la table de mesure (1a).

5. Dispositif de mesure selon les revendications 1 et 3, caractérisé par le fait que les ouvertures (12b, 12c) de la surface de mesure (2b, 2c) sont raccordées à une conduite d'aspiration externe (14b, 14c) par un canal (13b, 13c) pratiqué dans la plaque intermédiaire (15b, 15c).

6. Dispositif de mesure selon la revendication 3, caractérisé par le fait que la surface d'appui (16b, 16c) de la plaque intermédiaire (15b, 15c) placée sur la table de mesure (1b, 1c) comporte au moins une ouverture (17b, 17c) pour aspirer la couche d'air se trouvant entre la surface d'appui (16b, 16c) de la plaque intermédiaire (15b, 15c) et la surface (18b, 18c) de la table de mesure (1b, 1c).

7. Dispositif de mesure selon la revendication 3, caractérisé par le fait que la surface (18d) de la table de mesure (1d) placée en dessous de la surface d'appui (16d) de la plaque intermédiaire (15d) comporte au moins une ouverture (17d) pour aspirer la couche d'air se trouvant entre la surface (18d) de la table de mesure (1d) et la surface d'appui (16d) de la plaque intermédiaire (15d).

8. Dispositif de mesure selon les revendications 5 et 6, caractérisé par le fait que les ouvertures (17b) pratiquées dans la surface d'appui (16b) de la plaque intermédiaire (15b) sont raccordées aux ouvertures (12b) de la surface de mesure (2b) de la plaque intermédiaire (15b) par des canaux (13b, 13b') pratiqués dans la plaque intermédiaire (15b).

9. Dispositif de mesure selon la revendication 6, caractérisé par le fait que les ouvertures (17c) pratiquées dans la surface d'appui (16c) de la plaque intermédiaire (15c) sont raccordées à une conduite externe (20c) par un canal (19c) de la plaque intermédiaire (15c).

10. Dispositif de mesure selon la revendication 7, caractérisé par le fait que les ouvertures (17d) pratiquées dans la surface (18d) de la table de mesure (1d) sont raccordées à une conduite externe (20d) par un canal (19d) de la table de mesure (1d).

11. Dispositif de mesure selon les revendications 9 et 10, caractérisé par le fait que les conduits externes (20c, 20d) peuvent être soumises à l'action d'une surpression ou d'une dépression.

12. Dispositif de mesure selon la revendication 1, caractérisé par le fait que sur les ouvertures pratiquées dans la surface de mesure seuls des groupes déterminés d'ouvertures sont soumis à une dépression conformément à la surface d'appui de l'object à examiner.

## Fig. 1

## Fig. 2

0 109 510

## Fig.3

## Fig.4

## Fig.5